**Europäisches Patentamt**

**European Patent Office**

**Office européen des brevets**

(11) Veröffentlichungsnummer: **0 155 445**

**B1**

(12) **EUROPÄISCHE PATENTSCHRIFT**

(45) Veröffentlichungstag der Patentschrift:
06.04.88

(51) Int. Cl.⁴: **E 21 B 47/08**, G 01 B 7/12

(21) Anmeldenummer: **85100199.0**

(22) Anmeldetag: **10.01.85**

(54) Stationär einsetzbares Messgerät zur Bestimmung der Änderung des Durchmessers von Gesteinsbohrlöchern.

(30) Priorität: **12.01.84 DE 3400833**

(43) Veröffentlichungstag der Anmeldung:
**25.09.85 Patentblatt 85/39**

(45) Bekanntmachung des Hinweises auf die Patenterteilung:
**06.04.88 Patentblatt 88/14**

(84) Benannte Vertragsstaaten:
**BE FR GB NL SE**

(56) Entgegenhaltungen:
**GB-A-2 060 186**
**US-A-2 648 134**
**US-A-3 594 773**
**US-A-4 030 202**

(73) Patentinhaber: **Kernforschungsanlage Jülich Gesellschaft mit beschränkter Haftung, Postfach 1913, D-5170 Jülich 1 (DE)**

(72) Erfinder: **Kreutz, Ferdinand, Victor- Gollancz-Strasse 4, D-5170 Jülich (DE)**
Erfinder: **Keck, Jürgen, Kapuzinerstrasse 16, D-5170 Jülich (DE)**
Erfinder: **Bölingen, Johann, Nizzaallee 39, D-5100 Aachen (DE)**

LIBER, STOCKHOLM 1988

## Beschreibung

Die Erfindung bezieht sich auf ein stationär einsetzbares Meßgerät zur Bestimmung der Änderung des Durchmessers von Gesteinsbohrlöchern, mit zwei an die Bohrlochwand anlegbaren, radial elastisch verschiebbaren Teilen und einem induktiven oder kapazitiven elektrischen Wegaufnehmer zur Messung der radialen Verschiebung der beiden Teile.

Wie sich gezeigt hat, treten bei Bohrungen in geologischen Formationen im Laufe der Zeit Änderungen des Durchmessers auf. Insbesondere ist bei großkalibrigen Bohrungen in Salzbergwerken eine allmähliche Verringerung, d.h. eine Konvergenz des Durchmessers, festzustellen. Die Kenntnis des Ausmaßes dieser zeitlichen Verringerung des Durchmessers ist für in solche Bohrungen eingelagerte Proben, beispielsweise radioaktive Abfälle, von Bedeutung.

Ein Meßgerät der eingangs bezeichneten Art ist aus "Bergbau, Nr. 9/1981, Seite 578 bis 583" bekannt. Dieses Gerät weist zwei an die Bohrlochwand anlegbare elastisch gelagerte und radial verschließbar Teile, sowie einen induktiven Wegaufnehmer auf.

Ausgehend von dem genannten Stand der Technik ist es Aufgabe der Erfindung, ein Gerät zu schaffen, bei dessen Einsatz im Bohrloch der gesamte Hub zur Verfügung steht.

Dabei ist zu beachten, daß schon sehr geringe Durchmesseränderungen erfaßt werden müssen, was eine hohe Meßempfindlichkeit der Vorrichtung bedingt.

Die der Erfindung zugrundeliegende Aufgabe wird gemäß der Erfindung dadurch gelöst, daß die beiden an die Bohrlochwand anlegbaren Teile als ineinanderschiebbare Längsteile ausgebildet sind und der Wegaufnehmer einen mit dem einen der beiden Längsteile starr verbundenen Körper sowie eine mit dem anderen der beiden Längsteile durch eine Friktionskupplung verbundene Schubstange aufweist.

Zum Einsatz des Gerätes gemäß der Erfindung wird dieses längs des zu messenden Durchmessers im Bohrloch plaziert, wo es sich diametral im Bohrloch verspannt und für die Messung am Meßort verbleibt. Durch die Friktionskupplung ist gewährleistet, daß sich der Wegaufnehmer immer, also auch nach der Installation im Bohrloch, im Bereich seines Hubes befindet, nämlich auch dann, wenn das Gerät während der Installation stärker verkürzt werden mußte, als es dem Hub des Wegaufnehmers entspricht. Dadurch ergibt sich zugleich die Möglichkeit, einen sehr empfindlichen Wegaufnehmer mit sehr kurzem Hub zu verwenden, so daß noch Änderungen des Durchmessers um weniger als 0,1 mm gemessen werden können.

Eine besonders zweckmäßige Ausführungsform des Meßgerätes gemäß der Erfindung besteht darin, daß der Bewegunasspielraum der Schubstange des Wegaufnehmers relativ zum ersten Längsteil auf eine mittels eines Anschlags innerhalb zweier Endpositionen festgelegte, dem Bereich des Hubes entsprechende Wegstrecke begrenzt ist. Entspricht dabei insbesondere die vom Körper des Wegaufnehmers abgewandte Endstellung des Anschlages dem dem Körper abgewandten Hubende, so wird damit erreicht, daß nach der Anpassung des Gerätes im Bohrloch sich der Wegaufnehmer am Beginn des Hubes befindet, so daß für die Bestimmung der Verringerung des Durchmessers der gesamte Hub zur Verfügung steht.

Zweckmäßig kann ferner sein, beispielsweise zur Verschiebung des Wegaufnehmerhubes, daß ein elektrischer Antrieb mit Gewindespindel zur Bewegung der Hubstange vorgesehen ist.

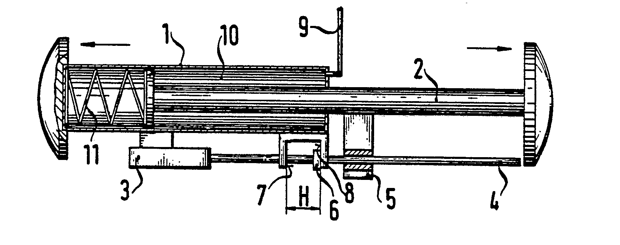

Eine Ausführungsform des Meßgerätes gemäß der Erfindung wird in der Zeichnung schematisch dargestellt und im folgenden näher erläutert.

Wie aus der Zeichnung ersichtlich ist, weist das Meßgerät zwei Längsteile 1 und 2 auf, die bei der in der Zeichnung dargestellten Ausführungsform aus Rohren mit unterschiedlichem Durchmesser, die daher ineinanderschiebbar sind, bestehen. An den beiden Längsteilen ist ein Wegaufnehmer 3, 4 angebracht, der aus dem Körper 3 und der Schubstange 4 besteht. Der Körper 3 ist am Längsteil 1 starr befestigt, wogegen die Schubstange 4 über die Friktionskupplung 5 am Längsteil 2 angebracht ist.

Der Bewegungsspielraum der Schubstange 4 ist mittels des Anschlages 6 auf die Wegstrecke H zwischen den Endpositionen 7 und 8 begrenzt.

Zur Installation des Meßgerätes wird dieses zunächst zum Absenken in das Bohrloch verkürzt, indem Druckluft über den Leitungsanschluß 9 in den Raum 10 des Längsteils 1 eingeleitet wird. Dabei wird die Feder 11 zusammengedrückt. Ist das Meßgerät am Meßort angelangt, wird Druckluft über den Leitungsanschluß 9 abgelassen, wodurch sich das Meßgerät automatisch verlängert und am Meßort verspannt.

Die zur Verkürzung des Meßgerätes beim Absenken in das Bohrloch und die zur Verlängerung des Meßgerätes zu dessen Verspannung am Meßort erforderliche Verschiebung der beiden Längsteile gegeneinander sind in der Regel größer als der Hub des Wegaufnehmers. Beim Verkürzen des Gerätes gelangt daher der Auschlag 6 in die Endposition 7 und beim Verlängern des Gerätes in die Endposition 8. Bei einer darüberhinaus erfolgenden Verschiebung der Längsteile gegeneinander gleitet die Schubstange in der Friktionskupplung.

Die in der Zeichnung dargestellte Stellung des Anschlags 6 entspricht der Stellung nach der Verlängerung des Meßgerätes bei seiner Verspannung am Meßort.

Für den Fall, daß nur eine Verringerung des Durchmessers des Bohrloches zu erwarten und daher nur diese gemessen werden soll, ist es zweckmäßig, daß die Wegstrecke H zwischen den Endpositionen 7 und 8 dem Hub des Wegaufnehmers entspricht. Insbesondere sollte die Endposition 8 des Wegaufnehmers dem dem Körper abgewandten Hubende entsprechen. Für die Messung der Verringerung des Bohrlochdurchmessers steht so der gesamte Hub für die Messung zur Verfügung.

Für den Fall, daß sowohl eine Vergrößerung als auch eine Verringerung des Bohrlochdurchmessers zu erwarten und daher zu messen sind, ist es zweckmäßig, eine Gewindespindel, die elektrisch und fernbedienbar verstellt wird, zum Verschieben der Schubstange 4 vorzusehen.

Zur Einstellung des Wegaufnehmers nach der Installation des Gerätes kann die Schubstange 4 dann -aus der in der Zeichnung dargestellten Position- zum Wegaufnehmerkörper 3 hin bewegt werden, so daß der Anschlag 6 etwa in der Mitte der Wegstrecke H zu liegen kommt.

## Patentansprüche

1. Stationär einsetzbares Meßgerät zur Bestimmung der Änderung des Durchmessers von Gesteinsbohrlöchern, mit zwei an die Bohrlochwand anlegbaren, radial elastisch verschiebbaren Teilen und einem induktiven oder kapazitiven elektrischen Wegaufnehmer zur Messung der radialen Verschiebung der beiden Teile, dadurch gekennzeichnet, daß die beiden an die Bohrlochwand anlegbaren Teile als ineinanderschiebbare Längsteile (1, 2) ausgebildet sind und der Wegaufnehmer einen mit dem einen der beiden Längsteile (1) starr verbundenen Körper (3) sowie eine mit dem anderen der beiden Längsteile (2) durch eine Friktionskupplung (5) verbundene Schubstange (4) aufweist.

2. Meßgerät nach Anspruch 1, dadurch gekennzeichnet, daß der Bewegungsspielraum der Schubstange (4) des Wegaufnehmers relativ zum ersten Längsteil (1) auf eine mittels eines Anschlags (6) innerhalb zweier Endpositionen (7, 8) festgelegte, dem Bereich des Hubes (H) entsprechende Wegstrecke begrenzt ist.

3. Meßgerät nach Anspruch 2, dadurch gekennzeichnet, daß zur Messung der Verringerung des Bohrlochdurchmessers die vom Körper (3) des Wegaufnehmers abgewandte Endstellung des Anschlages (6) dem dem Körper (3) abgewandten Hubende entspricht.

4. Meßgerät nach Anspruch 2 oder 3, dadurch gekennzeichnet, daß ein elektrischer Antrieb mit Gewindespindel zur Bewegung der Schubstange (4) vorgesehen ist.

## Claims

1. Stationarily employable measuring instrument for determining diameter variations in boreholes in rock, with two parts which can be placed against the borehole wall and can be displaced radially and elastically, and an inductive or capacitive electrical displacement transducer for measuring the radial displacement of the two parts, characterized in that the two parts which can be placed against the bore-hole wall are designed as telescoping longitudinal parts (1, 2), and the displacement transducer has a body (3), rigidly connected to one of the two longitudinal parts (1), and also a push rod (4) connected to the other of the two longitudinal parts (2) by a friction coupling (5).

2. Measuring instrument according to Claim 1, characterized in that the free motion of the push rod (4) of the displacement transducer relative to the fist longitudinal part (1) is limited to a displacement distance fixed by means of a stop (6) within two end positions (7, 8) and corresponding to the range of the stroke (H).

3. Measuring instrument according to Claim 2, characterized in that, for measuring the reduction in the borehole diameter, the end position of the stop (6) remote from the body (3) of the displacement transducer corresponds to the stroke end remote from the body (3).

4. Measuring instrument according to Claim 2 or 3, characterized in that an electric drive with a threaded spindle is provided for moving the push rod (4).

## Revendications

1. Appareil de mesure pouvant être utilisé à poste fixe pour déterminer la variation du diamètre de trous forés dans la roche, comprenant deux parties pouvant être appliquées à la paroi du trou foré et pouvant se déplacer radialement de manière élastique et un capteur électrique de déplacement, opérant par voie inductive ou capacitive, pour mesurer le déplacement radial des deux parties, caractérisé en ce que les deux parties qui sont susceptibles d'être appliquées à la paroi du trou sont constituées sous forme de parties oblongues (1, 2) télescopiques et le capteur de déplacement comprend une pièce (3) reliée rigidement à l'une des deux parties oblongues (1, 2) ainsi qu'une biellette (4) reliée à l'autre partie oblongue (2) par un dispositif d'accouplement à friction (5).

2. Appareil de mesure suivant la revendication 1, caractérisé en ce que le déplacement de la biellette (4) du capteur de déplacement par rapport à la première partie oblongue (1) est limité au moyen d'une butée (6), entre deux positions d'extrémité (7, 8), à une longueur de trajet déterminée entre deux positions d'extrémité (7, 8) et correspondant au domaine de la course (H).

3. Appareil de mesure suivant la revendication 2, caractérisé en ce que, pour mesurer des diminutions du diamètre des trous, la position d'extrémité de la butée (6), qui est éloignée de la pièce (3) du capteur de déplacement, correspond à l'extrémité de la course éloignée de la pièce (3).

4. Appareil de mesure suivant la revendication 2 ou 3, caractérisé en ce qu'il est prévu un dispositif électrique d'entraînement à broche filetée pour déplacer la biellette (4).